(19) Europäisches Patentamt / European Patent Office / Office européen des brevets

(11) **EP 2 394 276 B1**

(12) **EUROPÄISCHE PATENTSCHRIFT**

(45) Veröffentlichungstag und Bekanntmachung des Hinweises auf die Patenterteilung:
**07.08.2013 Patentblatt 2013/32**

(21) Anmeldenummer: **10701694.1**

(22) Anmeldetag: **01.02.2010**

(51) Int Cl.:
***H01C 7/112*** *(2006.01)*

(86) Internationale Anmeldenummer:
**PCT/EP2010/051185**

(87) Internationale Veröffentlichungsnummer:
**WO 2010/089276 (12.08.2010 Gazette 2010/32)**

(54) **VARISTORKERAMIK, VIELSCHICHTBAUELEMENT UMFASSEND DIE VARISTORKERAMIK, HERSTELLUNGSVERFAHREN FÜR DIE VARISTORKERAMIK**

VARISTOR CERAMIC, MULTILAYER COMPONENT COMPRISING THE VARISTOR CERAMIC, PRODUCTION METHOD FOR THE VARISTOR CERAMIC

CÉRAMIQUE POUR VARISTANCE, COMPOSANT MULTICOUCHE COMPORTANT LA CÉRAMIQUE POUR VARISTANCE, PROCÉDÉ DE FABRICATION DE LA CÉRAMIQUE POUR VARISTANCE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **03.02.2009 DE 102009007235**
**04.06.2009 DE 102009023847**

(43) Veröffentlichungstag der Anmeldung:
**14.12.2011 Patentblatt 2011/50**

(73) Patentinhaber: **Epcos AG**
**81669 München (DE)**

(72) Erfinder:
• **PIBER, Monika**
**A-8184 Anger (AT)**
• **GRÜNBICHLER, Hermann**
**A-8503 St. Josef (AT)**

(74) Vertreter: **Epping, Wilhelm**
**Epping Hermann Fischer**
**Patentanwaltsgesellschaft mbH**
**Ridlerstrasse 55**
**80339 München (DE)**

(56) Entgegenhaltungen:
**JP-A- 3 116 901    US-A1- 2002 024 040**
**US-A1- 2008 210 911**

EP 2 394 276 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrfft eine varistorkeramik, ein Vielschichtbauelement umfassend die Varistorkeramik und ein Herstellungsverfahren für die Varistorkeramik.

Varistoren sind spannungsabhängige Widerstände und werden als Überspannungsschutz eingesetzt.

Das Dokument JP 2002 246207 offenbart eine Varistorkeramik auf der Dasis von Zn 0 mit einem Zusats von Pr, jedoch explizit ohne B und K.

Ein weit verbreitetes Problem von Varistorkeramiken ist es, die Schaltfestigkeit im Hochstrombereich (ESD, 8/20) zu erhöhen und gleichzeitig eine hinreichend steile Kennlinie und zugleich geringem und stabilem Leckstrom zu erreichen.

Die Aufgabe wird durch eine Varistorkeramik nach dem Anspruch 1, Anspruch 11 durch ein Vielschichtbauelement nach Anspruch 10 und eine Verfahren nach gelost. Weitere Ausführungsformen sind Gegenstand der abhängigen Ansprüche.

Die Erfindung die durch die Merkmale von Anspruch 1 definiert ist betrifft eine Varistorkeramik, welche folgende Materialien umfasst:

- Zn als Hauptbestandteil,
- Pr zu einem Anteil von 0,1 bis 3 Atom-%

und zusätzlich umfassend B zu einem Anteil von 0,001 bis 5 Atom-%.

In einer Ausführungsform liegt das Zn als $Zn^{2+}$ vor und das Pr als $Pr^{3+}/Pr^{4+}$.

In einer Ausführungsform liegt der Anteil von Co in einem Bereich von 0,1 bis 10 Atom-%, wobei das Co vorzugsweise als $Co^{2+}/Co^{3+}$ vorliegt.

In einer Ausführungsform liegt der Anteil von Ca in einem Bereich von 0,001 bis 5 Atom-%, wobei das Ca vorzugsweise als $Ca^{2+}$ vorliegt.

In einer Ausführungsform liegt der Anteil von Si in einem Bereich von 0,001 bis 0,5 Atom-%, wobei das Si vorzugsweise als $Si^{4+}$ vorliegt.

In einer Ausführungsform liegt der Anteil von Al in einem Bereich von 0,001 bis 0,01 Atom-%, wobei das Al vorzugsweise als $Al^{3+}$ vorliegt.

In einer Ausführungsform liegt der Anteil von Cr in einem Bereich von 0,001 bis 5 Atom-%, wobei das Cr vorzugsweise als $Cr^{3+}$ vorliegt.

In einer Ausführungsform liegt das B vorzugsweise als $B^{3+}$ vor.

Eine Ausführungsform löst das technische Problem auf der Basis einer für Vielschichtvaristoren geeigneten Materialzusammensetzung, in der als Hauptkomponente Zinkoxid verwendet wird, dem die Oxide von Praseodym (0.1-3 Atom-%) sowie Cobalt (0.1-10 Atom-%) als Dotanden zugegeben werden und außerdem Kalzium (0.001-5 Atom-%), Silizium (0.001-1 Atom-%), Aluminium (0.001-0.1 Atom-%), Chrom (0.001-5 Atom-%) in Oxidform sowie Bor in gebundener Form (0.001-5 Atom-%) zugesetzt sind.

Hierbei ist ein Bereich von 0,001-0,01 Atom-% für Aluminium bevorzugt.

Auf diese Weise wird eine gegenüber dem bisherigen Stand verbesserte Nichtlinearität, Reproduzierbarkeit und Stabilität im Hochstrombereich (ESD, 8/20) und zugleich bedingt durch den hohen Korngrenzwiderstand ein verringerter Leckstrom erreicht. Im Detail sind die genannten Vorteile im Ausführungsteil beschrieben.

Die Varistorkeramik, kann in einer geeigneten Prozessführung zu Vielschichtbauelementen verarbeitet werden, die hinsichtlich der Nichtlinearität, der Reproduzierbarkeit, der ESD-Stabilität, der Stoßstromstabilität und des Leckstroms bisherige Lösungen übertreffen.

In einer Ausführungsform umfasst die Varistorkeramik als Basis das Materialsystem ZnO, sowie die Oxide von Praseodym (0.1-3 Atom-%) sowie Cobalt (0.1-10 Atom-%) als Dotanden und außerdem Kalzium (0.001-5 Atom-%), Silizium (0.001-0.5 Atom-%), Aluminium (0.001-0.1 Atom-%), Chrom (0.001-5 Atom-%) in Oxidform sowie Bor in gebundener Form (0.001-5 Atom-%).

Hierbei ist ein Bereich von 0,001-0,01 Atom-% für Aluminium bevorzugt.

In einer Ausführungsform umfasst die Varistorkeramik ZnO als Hauptbestandteil, $Pr^{3+}/Pr^{4+}$ zu einem Anteil von 0,1 bis 3 Atom-%, $Co^{2+}/Co^{3+}$ zu einem Anteil von 0,1 bis 10 Atom-%, $Ca^{2+}$ zu einem Anteil von 0,001 bis 5 Atom-%, $Si^{4+}$ zu einem Anteil von 0,001 bis 0,5 Atom-%, $Al^{3+}$ zu einem Anteil von 0,001 bis 0,1 Atom-%, $Cr^{3+}$ zu einem Anteil von 0,001 bis 5 Atom-% und $B^{3+}$ zu einem Anteil von 0,001 bis 5 Atom-%.

Die Figur 1 zeigt als schematisches Fließschema den Herstellungsprozess von Vielschichtvaristoren umfassend die Verfahrensschritte: A1 Einwaage, A2 Vormahlung, A3 Trocknung, A4 Sieben, A5 Kalzination, A6 Nachmahlung, A7 Trocknung, A8 Sieben, B1 Schlickerbildung, B2 Grünfolien, C1 Bedrucken mit leitfähiger Paste, C2 Stapeln, C3 Cutten, D1 Entkohlung, D2 Sinterung, E1 Aufbringen der Außenterminierung, E2 Einbrennen.

Die Figur 2 zeigt schematisch den Aufbau eines Vielschichtvaristors umfassend die Innenelektroden (1), das Varistorkeramikmaterial (2) und die Außenterminierung (3).

In einer Ausführungsform liegt der Keramikkörper des Vielschichtvaristors als monolithischer Keramikkörper vor.

Die Figur 3 zeigt links die Kennlinie eines ESD-Pulses und rechts die Kennlinie eines 8/20-Pulses.

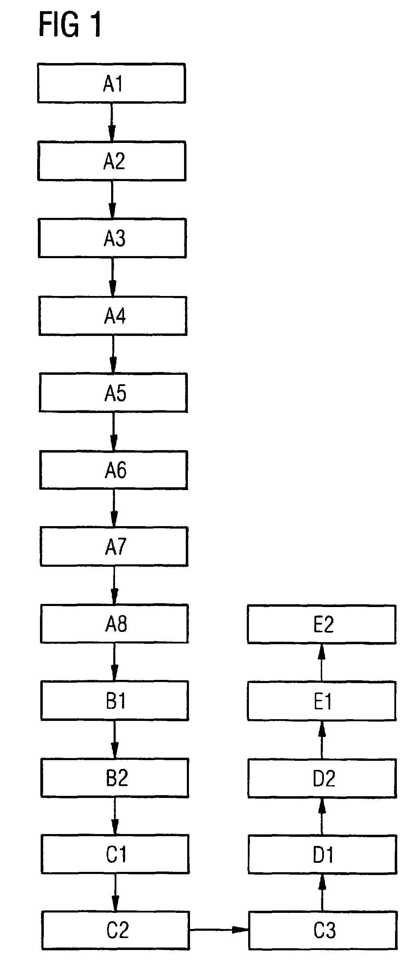

Die Herstellung des Vielschichtvaristors kann nach Figur 1 erfolgen.

In einer Ausführungsform beträgt das Verhältnis der Elemente des Varistormaterials 97.8 Atom-% Zn, 1.5 Atom-% Co, 0.1 Atom-% Cr, 0.02 Atom-% Si, 0.02 Atom-% Ca, 0.002 Atom-% B und 0.006 Atom-% Al. Diese Bestandteile werden in oxidischer beziehungsweise gebundener Form in den oben genannten Verhältnissen eingewogen (A1), vorgemahlen (A2), getrocknet (A3), gesiebt (A4) und anschließend zwischen 400 °C und 1000 °C kalziniert (A5), nachgemahlen (A6), sprühgetrocknet (A7) und gesiebt (A8).

Aus dem auf diese Weise hergestellten Pulver wird durch Zugabe eines Binders, Dispergiermittels sowie eines Lösungsmittels ein Schlicker hergestellt (B1), aus dem Folien mit einer Schichtdicke zwischen 5 und 60 μm gezogen werden (B2), die danach nach analog dem Prozessdiagramm in Abbildung 1, zu Vielschichtvaristoren verarbeitet werden: Dabei werden die Grünfolien mit einer leitfähigen Paste bedruckt (Cl), gestapelt und anschließend gecuttet (C2, C3).

Der Binder wird im folgenden Entkohlungsschritt (D1) aus den Grünteilen bei Temperaturen zwischen 180 °C und 500 °C ausgebrannt und die Bauteile bei einer Temperatur zwischen 1100 und 1400 °C gesintert (D2). Anschließend wird die Außenterminierungsschicht (E1) aufgebracht und diese Schicht wird bei Temperaturen zwischen 600 °C und 1000 °C eingebrannt (E2).

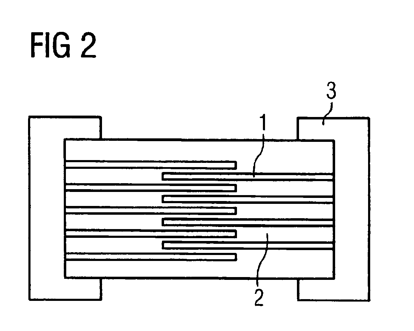

Figur 2 zeigt in schematischer Seitenansicht ein Vielschichtbauelement. Hierbei folgen die Innenelektroden (1) und die Schicht des Varistorkeramikmaterial (2) alternierend aufeinander. Die Innenelektroden (1) sind abwechselnd jeweils mit der einen bzw. anderen Außenterminierung (3) verbunden. Im mittleren Bereich überlappen die Innenelektroden (1). Einen typischen Aufbau eines 0402 Vielschichtvaristors (Abmessungen 1.0 mm x 0.5 mm x 0.5 mm) zeigt Figur 2: Wobei die Überlappungsfläche der Innenelektrode (2) sowie die Anzahl der Innenelektroden an die gewünschten elektrischen Bauteileigenschaften angepasst werden können.

Die elektrische Charakterisierung der Bauteile erfolgte durch Bestimmung des Leckstromes, der Varistorspannung, des Nichtlinearitätskoeffizienten, der 8/20-Pulsstabilität, der ESD-Pulsstabilität, der 8/20-Klemmenspannung bei 1 A ($U_K$).

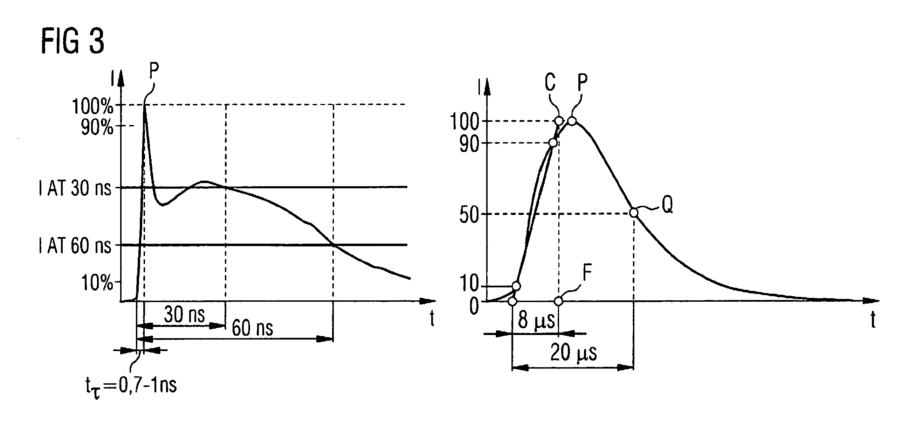

Figur 3 zeigt links und rechts jeweils einen Pulsverlauf. Hierbei ist jeweils der Strom I gegen die Zeit t aufgetragen.

Die Varistorspannung $U_V$ wird bei 1 mA bestimmt, der Leckstrom $I_L$ bei einer Spannung von 3.5 V gemessen. Die ESD-Stabilität wird mit Pulsen der Abb. 3 bestimmt: Dazu wurden die Bauteile mit +/- 10 ESD-Pulse (siehe Fig. 3 rechts) belastet. Die prozentuelle Änderung von $U_V$ vor und nach den Pulsen sowie des Leckstromes vor und nach den Pulsen in Prozent werden berechnet und dürfen keine prozentuelle Änderung von mehr als 10 % aufweisen. Außerdem wurden 8/20 Robustheitstests (Pulsform siehe Fig. 3 rechts) durchgeführt. Dabei wurden die Bauteile mit 8/20-Pulsen (siehe Fig. 3 rechts) bei 1 A, 5 A, 10 A, 15 A, 20 A und 25 A belastet, sowie die prozentuelle Änderung der Varistorspannung und des Leckstrom nach der Belastung bestimmt.

Die Nichtlinearitätskoeffizienten wurden nach den folgenden Gleichungen bestimmt:

$$\alpha_1\ (10\mu A/1mA) = \log\ (1*10^{-3}/10*10^{-6})/\log\ (V_{10mA}/V_{10\mu A})$$

$$\alpha_2\ (1mA/1A) = \log\ (1/1*10^{-3})/\log\ (V_{1A}/V_{1mA})$$

$$\alpha_3\ (1mA/20A) = \log\ (20/1*10^{-3})/\log\ (V_{20A}/V_{1mA})$$

Stabilitätstest wurden unter 80 % AVR bei 125 °C durchgeführt, wobei der Leckstrom $I_L$ unter diesen Bedingungen keine steigende Charakteristik aufweisen sollte.

Tabelle 1 Elektrische Ergebnisse

| | $U_V$ [V] | $I_L$ [μA] | $U_K$ [V] | $\alpha_1$ | $\alpha_2$ | $\alpha_3$ | 8/20 Stabil. | ESD Stab. |
|---|---|---|---|---|---|---|---|---|
| Standardmaterial | 6.1 | < 1 | < 15 | 13 | 8.5 | 7.0 | > 25 A | > 30 kV |

Tabelle 1 zeigt die elektrischen Messwerte von den untersuchten Bauteilen mit einer Varistorspannung von 6.1 V und einem Leckstrom < 1 μA. Der Nichtlinearitätskoeffizient $\alpha_1$ betrug 13, $\alpha_2$ 8.5 und $\alpha_3$ 7.0. Die 8/20 Klemmenspannung $U_K$ bei 1 A, bestimmt mit einem 8/20 Puls, ist kleiner als 15 V und die Bauteile bestanden einen 8/20 Puls von 25 A, ohne dass sich die Kennlinie mehr als 10 % im Leckstrombereich sowie im Bereich der Varistorspannung änderte. Ohne Änderung des Leckstroms und der Varistorspannung konnten die Bauteile mit ESD-Pulsen von 30 kV nach dem Human Body Modell belastet werden. Der Stabilitätstest unter den oben genannten Bedingungen zeigte für einen Belastungszeitraum von 500 Stunden eine gleich bleibende beziehungsweise leicht fallende Leckstromcharakteristik. Zwischenmessungen und Endmessungen der Varistorparameter $U_V$ und $I_L$ zeigten eine prozentuelle Änderung der Werte von weniger als 2 % nach der Belastung der Bauteile bei 80 % AVR bei 125 °C.

Variationen der Siliziumkonzentration, der Cobaltbeziehungsweise der Praseodym-Konzentration und des Aluminiumgehaltes zeigen die Chargenreproduzierbarkeit sowie die Robustheit der Keramikzusammensetzung bezüglich Schwankungen in der Einwaage. Bei allen Variationen der Keramikzusammensetzung verursacht eine Variation der chemischen Zusammensetzung der Varistorkeramik nur eine geringfügige Änderung der elektrischen Kennwerte der Strom/Spannungskennlinie sowie der Beständigkeit bezüglich 8/20-Pulsen und ESD-Pulsen. Zusammensetzungsvariationen in Tabelle 2 und Tabelle 4 sowie die entsprechenden elektrischen Kenngrößen in Tabelle 3 und Tabelle 5 bestätigen dies.

Tabelle 2 Einwaage: (Einheiten in Atom-%)

| Material | Zn | Pr | Co | Cr | Si | Ca | B | Al |
|---|---|---|---|---|---|---|---|---|
| A | 97.8 | 0.5 | 1.6 | 0.1 | 0.02 | 0.02 | 0.002 | 0.006 |
| B | 97.8 | 0.5 | 1.6 | 0.1 | 0.04 | 0.02 | 0.002 | 0.006 |
| C | 97.8 | 0.5 | 1.6 | 0.1 | 0.14 | 0.02 | 0.002 | 0.006 |

Tabelle 3 Elektrische Ergebnisse

| Material | $U_V$ [V] | $I_L$ [µA] | $\alpha_1$ | $\alpha_2$ | $\alpha_3$ | 8/20 Stabilität | ESD Stabilität |
|---|---|---|---|---|---|---|---|
| A | 6.1 | < 1 | 13.0 | 8.4 | 7.0 | > 25 A | > 30 kV |
| B | 6.5 | < 1 | 13.6 | 8.6 | 7.4 | > 25 A | > 30 kV |
| C | 7.1 | < 0.5 | 11.3 | 8.3 | 7.2 | > 20 A | > 30 kV |

Tabelle 4 Einwaage: (Einheiten in Atom-%)

| Material | Zn | Pr | Co | Cr | Si | Ca | B | Al |
|---|---|---|---|---|---|---|---|---|
| A | 97.8 | 0.5 | 1.6 | 0.1 | 0.02 | 0.02 | 0.002 | 0.006 |
| D | 97.8 | 0.55 | 1.5 | 0.1 | 0.02 | 0.02 | 0.002 | 0.006 |
| E | 97.5 | 0.55 | 1.8 | 0.1 | 0.02 | 0.02 | 0.002 | 0.006 |
| F | 97.4 | 0.6 | 1.8 | 0.1 | 0.02 | 0.02 | 0.002 | 0.006 |
| G | 97.8 | 0.6 | 1.5 | 0.1 | 0.02 | 0.02 | 0.002 | 0.006 |

Tabelle 5 Elektrische Ergebnisse

| Material | $U_V$ [V] | $I_L$ [µA] | $\alpha_1$ | $\alpha_2$ | $\alpha_3$ | 8/20 Stabilität | ESD Stabilität |
|---|---|---|---|---|---|---|---|
| A | 6.1 | < 1 | 13.0 | 8.4 | 7.0 | > 25 A | > 30 kV |
| D | 6.9 | < 0.4 | 12.7 | 9.7 | 7.4 | > 25 A | > 30 kV |
| E | 7.4 | < 0.5 | 15.8 | 9.5 | 7.3 | > 25 A | > 30 kV |
| F | 7.1 | < 0.4 | 14.2 | 10.1 | 7.9 | > 25 A | > 30 kV |
| G | 7.9 | < 0.03 | 20.1 | 9.4 | 7.6 | > 25 A | > 30 kV |

In einer Ausführungsform liegt der Anteil von Zn, das als Oxid eingesetzt wird, vorzugsweise bei größer 90 Atom-%.

In einer Ausführungsform liegt der Anteil von Pr vorzugsweise in einem Bereich von 0,5 bis 0,6 Atom-%.

In einer Ausführungsform liegt der Anteil von Co vorzugsweise in einem Bereich von 1,5 bis 2,0 Atom-%.

In einer Ausführungsform liegt der Anteil von Ca vorzugsweise in einem Bereich von 0,01 bis 0,03 Atom-%.

In einer Ausführungsform liegt der Anteil von Si vorzugsweise in einem Bereich von 0,01 bis 0,15 Atom-%.

In einer Ausführungsform liegt der Anteil von Al vorzugsweise in einem Bereich von 0,005 bis 0,1 Atom-%, besonders bevorzug im Bereich von 0,005 bis 0,01 Atom-%

In einer Ausführungsform liegt der Anteil von Cr vorzugsweise in einem Bereich von 0,05 bis 0,2 Atom-%.

In einer Ausführungsform liegt der Anteil von B vorzugsweise in einem Bereich von 0,001 bis 0,01 Atom-%.

In Folge der Vermeidung von Alkalicarbonatzusätzen kann eine hohe Reproduzierbarkeit in der technischen Prozessführung erreicht werden.

Durch die Vermeidung von Alkaliverbindungen in der Rezeptur wird eine wesentliche Verbesserung in der Reproduzierbarkeit der Prozessführung in den nasschemischen Verarbeitungsstufen erreicht. Es resultiert daraus eine geringe Exemplarstreuung und zugleich eine verbesserte Chargenreproduzierbarkeit. Durch die Anwendung von Borverbindungen, die Boroxid als Sinterhilfsmittel erst bei höheren Temperaturen freisetzen, wird eine Herabminderung der Sintertemperatur auf unter 1200 °C ohne Alkalioxidzusätze erreicht, und es kommt dadurch eine günstige Gefügeausbildung mit einem definierten Aufbau der Barrieren im Korngrenzbereich zustande, die sich bei kontrollierter Abkühlung an Luft ausbildet.

Im Herstellungsverfahren kann Boroxid unter weitgehender Vermeidung von Verdampfungsverlusten zwecks Steuerung von Gefügeausbildung als Sinterhilfsmittel im Bereich hoher Temperaturen aus geeigneten Vorstufen freigesetzt werden.

Die Vielschichtvaristoren der Bauformen 0402 und 0201 zeichnen sich durch ausgezeichnete Ergebnisse beim Leckstrom, der ESD-Stabilität, 8/20-Robustheit, Langzeitstabilität und Nichtlinearität aus.

Unter Hauptbestandteil ist ein Anteil von mindestens 50 Atom-% zu verstehen. Der Anteil an Zn beträgt vorzugsweise mehr als 70 Atom-%.

Das erfindungsgemäße Herstellungsverfahren der Varistorkeramik umfasst das Herstellungsverfahren die Verfahrensschritte: a) Kalzinieren des Rohkeramikmaterials, b) Herstellung eines Schlickers, c) Fertigen von Grünfolien, d) Entbindern der Grünfolien und e) Sintern der Grünfolien aus d).

In einer Variante des Herstellungsverfahrens umfasst dieses zusätzlich zwischen den Verfahrenschritten d) und e) den Verfahrensschritt d1) Aufbauen eines Bauteils.

In einer weiteren Variante des Herstellungsverfahrens wird Boroxid aus einem Boroxid-Precursor freigesetzt, oder in Form eines Bor-haltigen Glases zugegeben wird.

In einer weiteren Variante des Herstellungsverfahrens liegt die Sintertemperatur zwischen 900 und 1200 °C, vorzugsweise liegt sie im Bereich zwischen 1100 °C und 1200 °C.

Bezugszeichenliste

1)  Innenelektrode
2)  Varistorkeramikmaterial
3)  Außenterminierung

**Patentansprüche**

1.  Varistorkeramik, welche keine Alkaliverbindungen aufweist und folgende Materialien umfasst:

    - Zn als Hauptbestandteil,
    - Pr zu einem Anteil von 0,1 bis 3 Atom-%

    und
    zusätzlich umfassend B zu einem Anteil von 0,001 bis 5 Atom-%.

2.  Varistorkeramik nach Anspruch 1, zusätzlich umfassend

    - Co zu einem Anteil von 0,1 bis 10 Atom-%.

3.  Varistorkeramik nach einem der vorhergehenden Ansprüche, zusätzlich umfassend

- Ca zu einem Anteil von 0,001 bis 5 Atom-%.

4. Varistorkeramik nach einem der vorhergehenden Ansprüche, zusätzlich umfassend

- Si zu einem Anteil von 0,001 bis 0,5 Atom-%.

5. Varistorkeramik nach einem der vorhergehenden Ansprüche, zusätzlich umfassend

- Al zu einem Anteil von 0,001 bis 0,01 Atom-%.

6. Varistorkeramik nach einem der vorhergehenden Ansprüche, zusätzlich umfassend

- Cr zu einem Anteil von 0,001 bis 5 Atom-%.

7. Varistorkeramik nach einem der vorhergehenden Ansprüche, umfassend

- Zn als Hauptbestandteil,
- Pr zu einem Anteil von 0,1 bis 3 Atom-%,
- Co zu einem Anteil von 0,1 bis 10 Atom-%,
- Ca zu einem Anteil von 0,001 bis 5 Atom-%,
- Si zu einem Anteil von 0,001 bis 0,5 Atom-%,
- Al zu einem Anteil von 0,001 bis 0,01 Atom-%,
- Cr zu einem Anteil von 0,001 bis 5 Atom-%,
- B zu einem Anteil von 0,001 bis 5 Atom-%.

8. Varistorkeramik nach einem der vorhergehenden Ansprüche, umfassend

- ZnO als Hauptbestandteil,
- $Pr^{3+}/Pr^{4+}$ zu einem Anteil von 0,1 bis 3 Atom-%,
- $Co^{2+}/Co^{3+}$ zu einem Anteil von 0,1 bis 10 Atom-%,
- $Ca^{2+}$ zu einem Anteil von 0,001 bis 5 Atom-%,
- $Si^{4+}$ zu einem Anteil von 0,001 bis 0,5 Atom-%,
- $Al^{3+}$ zu einem Anteil von 0,001 bis 0,1 Atom-%,
- $Cr^{3+}$ zu einem Anteil von 0,001 bis 5 Atom-%,
- $B^{3+}$ zu einem Anteil von 0,001 bis 5 Atom-%.

9. Varistorkeramik nach Anspruch 7 oder 8,
wobei die Keramik keine weiteren Metalle umfasst.

10. vielschichtbauelement umfassend eine Varistorkeramik nach einem der Ansprüche 1 bis 9,
welches eine Bauform für einen ESD-Schutz aufweist.

11. Verfahren zur Herstellung einer Varistorkeramik nach einem der Ansprüche 1 bis 10 umfassend die Verfahrensschritte:

a) Kalzinieren des Rohkeramikmaterials,
b) Herstellung eines Schlickers,
c) Fertigen von Grünfolien,
d) Entbindern der Grünfolien,
e) Sintern der Grünfolien aus d).

12. Verfahren nach Anspruch 11,
wobei Boroxid aus einem Boroxid-Precursor freigesetzt wird, oder in Form eines Bor-haltigen Glases zugegeben wird.

13. Verfahren nach Anspruch 11 oder 12, wobei die Sintertemperatur in Verfahrensschritt e) zwischen 900 und 1200 °C liegt.

**Claims**

1. Varistor ceramic, which has no alkali metal compounds and comprises the following materials:

   - Zn as the main constituent,
   - Pr in a proportion of from 0.1 to 3 atom%,

   and
   further comprising B in a proportion of 0.001 to 5 atom%.

2. Varistor ceramic according to Claim 1, further comprising

   - Co in a proportion of 0.1 to 10 atom%.

3. Varistor ceramic according to one of the preceding claims, further comprising

   - Ca in a proportion of 0.001 to 5 atom%.

4. Varistor ceramic according to one of the preceding claims, further comprising

   - Si in a proportion of 0.001 to 0.5 atom%.

5. Varistor ceramic according to one of the preceding claims, further comprising

   - Al in a proportion of 0.001 to 0.01 atom%.

6. Varistor ceramic according to one of the preceding claims, further comprising

   - Cr in a proportion of 0.001 to 5 atom%.

7. Varistor ceramic according to one of the preceding claims, comprising

   - Zn as the main constituent,
   - Pr in a proportion of 0.1 to 3 atom%,
   - Co in a proportion of 0.1 to 10 atom%,
   - Ca in a proportion of 0.001 to 5 atom%,
   - Si in a proportion of 0.001 to 0.5 atom%,
   - Al in a proportion of 0.001 to 0.01 atom%,
   - Cr in a proportion of 0.001 to 5 atom%,
   - B in a proportion of 0.001 to 5 atom%.

8. Varistor ceramic according to one of the preceding claims, comprising

   - ZnO as the main constituent,
   - $Pr^{3+}/Pr^{4+}$ in a proportion of from 0.1 to 3 atom%,
   - $Co^{2+}/Co^{3+}$ in a proportion of from 0.1 to 10 atom%,
   - $Ca^{2+}$ in a proportion of from 0.001 to 5 atom%,
   - $Si^{4+}$ in a proportion of from 0.001 to 0.5 atom%,
   - $Al^{3+}$ in a proportion of from 0.001 to 0.1 atom%,
   - $Cr^{3+}$ in a proportion of from 0.001 to 5 atom%,
   - $B^{3+}$ in a proportion of from 0.001 to 5 atom%.

9. Varistor ceramic according to Claim 7 or 8, wherein the ceramic comprises no further metals.

10. Multilayer component comprising a varistor ceramic according to one of Claims 1 to 9, which has a configuration for ESD protection.

11. Method for producing a varistor ceramic according to one of Claims 1 to 10, comprising the method steps:

a) calcining the raw ceramic material,
b) producing a slurry
c) making green films,
d) debinding the green films,
e) sintering the green films from d).

12. Method according to Claim 11,
    wherein boron oxide is released from a boron oxide precursor, or is added in the form of a boron-containing glass.

13. Method according to Claim 11 or 12, wherein the sintering temperature in method step e) lies between 900 and 1200°C.

## Revendications

1. Céramique pour varistor, exempte de composés d'alcali et comportant les matériaux suivants :

   Zn comme composant principal,
   Pr à une teneur de 0,1 à 3 % atomiques et
   en outre B à une teneur de 0,001 à 5 % atomiques.

2. Céramique pour varistor selon la revendication 1, comportant en outre Co à une teneur de 0,1 à 10 % atomiques.

3. Céramique pour varistor selon l'une des revendications précédentes, comportant en outre Ca à une teneur de 0,001 à 5 % atomiques.

4. Céramique pour varistor selon l'une des revendications précédentes, comportant en outre Si à une teneur de 0,001 à 0,5 % atomiques.

5. Céramique pour varistor selon l'une des revendications précédentes, comportant en outre Al à une teneur de 0,001 à 0,01 % atomiques.

6. Céramique pour varistor selon l'une des revendications précédentes, comportant en outre Cr à une teneur de 0,001 à 5 % atomiques.

7. Céramique pour varistor selon l'une des revendications précédentes, comportant :

   Zn comme composant principal,
   Pr à une teneur de 0,1 à 3 % atomiques,
   Co à une teneur de 0,1 à 10 % atomiques,
   Ca à une teneur de 0,001 à 5 % atomiques,
   Si à une teneur de 0,001 à 0,5 % atomiques,
   Al à une teneur de 0,001 à 0,01 % atomiques,
   Cr à une teneur de 0,001 à 5 % atomiques,
   B à une teneur de 0,001 à 5 % atomiques.

8. Céramique pour varistor selon l'une des revendications précédentes, comportant :

   ZnO comme composant principal,
   $Pr^{3+}/Pr^{4+}$ à une teneur de 0,1 à 3 % atomiques,
   $Co^{2+}/Co^{3+}$ à une teneur de 0,1 à 10 % atomiques,
   $Ca^{2+}$ à une teneur de 0,001 à 5 % atomiques,
   $Si^{4+}$ à une teneur de 0,001 à 0,5 % atomiques,
   $Al^{3+}$ à une teneur de 0,001 à 0,1 % atomiques,
   $Cr^{3+}$ à une teneur de 0,001 à 5 % atomiques,
   $B^{3+}$ à une teneur de 0,001 à 5 % atomiques.

9. Céramique pour varistor selon les revendications 7 ou 8, la céramique ne comportant aucun autre métal.

10. Composant multicouche comportant une céramique pour varistor selon l'une des revendications 1 à 9 et présentant une forme prévue pour une protection contre les ESD.

11. Procédé de fabrication d'une céramique pour varistor selon l'une des revendications 1 à 10, le procédé comportant les étapes suivantes :

    a) calcination de la matière première de céramique,
    b) formation d'une barbotine,
    c) réalisation de feuilles crues,
    d) déliaison des feuilles crues,
    e) frittage des feuilles crues obtenues en d).

12. Procédé selon la revendication 11, dans lequel de l'oxyde de bore est libéré d'un précurseur d'oxyde de bore ou est ajouté sous la forme d'un verre contenant du bore.

13. Procédé selon les revendications 11 ou 12, dans lequel la température de frittage de l'étape e) du procédé est située entre 900 et 1 200°C.

# FIG 1

FIG 2

# FIG 3

EP 2 394 276 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2002246207 A